# EUROPEAN PATENT APPLICATION

(11) **EP 3 162 686 A1**
(43) Date of publication of application: **03.05.2017**
(21) Application number: 15812489.1
(22) Date of filing: 16.04.2015
(51) Int. Cl.: B62K 15/00

(54) **METHOD FOR FASTENING SEPARATION TYPE TRICYCLE**

(30) Priority: 24.06.2014 KR 20140077170
(71) Applicant: Kim, Chong Chul, Daejeon 305-506 (KR); Kim, Hwan Young, Daejeon 305-506 (KR)
(72) Inventor: Kim, Chong Chul, Daejeon 305-506 (KR); Kim, Hwan Young, Daejeon 305-506 (KR)
(74) Representative: Rau, Schneck & Hübner Patentanwälte Rechtsanwälte PartGmbB
(86) International application number: PCT/KR2015/003828
(87) International publication number: WO 2015/199324

(57) **Abstract**

Provided is a method for fastening a separation type tricycle in which a connecting pipe for connecting a front wheel part and a rear wheel part can be separated from and fastened to a head tube of the front wheel part, wherein the front wheel part and the rear wheel part are separated from each other by forming an ear-shaped groove, in which a handle bar can be put, in a right-side-open rectangular shaped plate fixed to the end of the connecting pipe so as to be used for attachment/detachment in a fastening device of the head tube, and then the end of a connecting bar for connecting the front wheel part and the rear wheel part is put on the handle bar by using the groove and another place is fixed thereto so as to set three wheels at the shortest distance therewith, thereby conveniently moving and storing the tricycle.

## Description

### TECHNICAL FIELD

The present invention relates to a method for fastening a separation type tricycle capable of separating or fastening a front wheel part and a rear wheel part according to purpose in order to facilitate the transportation and storage. More specifically, the present invention relates to the separation and fastening of a separation type tricycle in which a connecting pipe for connecting a front wheel part and a rear wheel part is attached and detached from and fastened to a head tube of the front wheel part; the end of the connecting pipe for connecting the front wheel part and the rear wheel part has a function of being attachable/detachable in a fastening device of the head tube; after separation, this end is put on a handle bar, and one place of the head tube and one place of the bottom bracket shell are connected to each other to set three wheels at a close distance therewith, thereby greatly reducing the distance between the front wheel part and the rear wheel part. In this case, even when the length of the connecting pipe connecting the front wheel part and the rear wheel part is long and the end of the connecting pipe capable of separating and fastening is put on the handle bar and so another place is hardly fixed thereto, there is provided a method for adjusting the length of the connecting pipe for connecting a front wheel part and a rear wheel part so as to set three wheels at a close distance.

### BACKGROUND OF ART

Generally, a two-wheel bicycle with high convenience and mobility has been mainly used. However, the bicycle has a characteristic that it falls easily if the wheels do not roll. Thus, as a bicycle for children who have a lack of motor nerve functions, a tricycle that do not fall even without rolling has been mainly used. In order to take advantage of the high stability of such a tricycle, an adult tricycle has been developed steadily. However, since the volume of the tricycle is too large, the adult tricycle is made for a rickshaw, a cart or the like. The bicycle having applications comparable to two wheels with high-speed has not been put to practical use.

On the other hand, as light rechargeable secondary battery having a large capacity is supplied cheaply, the demand for electric bicycle is increasing, but the weight increasing due to a battery, a motor or the like results in raising the center of gravity of the two wheels, thereby increasing the risk of accidents. However, in the case of a tricycle, a battery and a motor are inserted between two wheels close to the tricycle and thus the center of gravity can be lowered up to the height of the wheel shaft and the weight can be dispersed on two wheels. Thereby, it is possible to make the appearance of an electric bicycle capable of achieving the high stability of the tricycle as it is.

However, as one wheel further increases rather than the stability of the tricycle, the volume increases greatly and the weight due to the reinforcement of a frame becomes large, and thus it is accompanied by the inconvenience of being difficult to handle. These inconveniences have a great influence on the spread of the tricycle.

### DETAILED DESCRIPTION OF THE INVENTION

### Technical Problem

The present invention was designed to resolve the aforesaid problems of the prior arts. In a first aspect, one end of a connecting pipe for connecting a front wheel part and a rear wheel part can be separated so that the volume can reduce greatly when storing or transporting without riding; one end of the separated connecting pipe and one place of the rear wheel part are closely fixed at two places of the front wheel, thereby setting three wheels of the separated bicycle at the closest distance. In this way, the distance between the front and back is greatly reduced, making it easier to store and transport. In a second aspect, when constructing a tricycle, the structure having a thicker frame than necessary, which greatly influences the weight increase, is avoided and so simple, and further the tricycle is configured to have a structure with a minimum thickness and to form the frame of the tricycle attached with three wheels, thereby greatly reducing the weight of the bicycle.

### Technical Solution

In order to set the three wheels apart from each other at the closest distance, one wheel is made to be set as close as possible to the place where the two wheels are fixed to one shaft. Then, the distance between the front and rear is greatly reduced, and the volume is decreased. To this end, the end of the connecting pipe connecting a front wheel part and a rear wheel pat is separated from a head tube of the front wheel part and allowed to be fastened thereto, and, if necessary, the front wheel part and the rear wheel part are completely separated and the volume is greatly reduced, thereby facilitating the storage and transportation. Further, when a user wants to drive, the user can fasten the separated parts and utilize the tricycle like a general bicycle, thereby significantly reducing a discomfort due to a large volume of the tricycle. In addition, it is possible to transport and store the separated two parts separately, but it is often convenient to handle them in a single body with a reduced volume. Therefore, they can be easily put on a handle bar by forming an ear-shaped groove, so that a handle bar can be put in a right-side-open rectangular shaped plate of the fastening part at the end of the separated connecting pipe. Further, if the front wheel part and the rear wheel part are put on one place only, the three wheels cannot be fixed. Therefore, a fastening device which can attach and detach at one place of the head tube and near the bottom bracket shell on the rear wheel side is provided so that the three wheels are fixed at the nearest distance. In this case, when the distance from one end of the connecting pipe fastened to the front wheel part to the end of the rear wheel is longer than the distance from the handle bar to the end of the front wheel, it is not fixed. Thus, at this time, it is possible to set the three wheels at the closest distance by adjusting the length of the connecting pipe.

For this purpose, it is desirable to utilize a double-layered connecting pipe so that the length of the connecting pipe can be easily increased or decreased as necessary while maintaining the rigidity of the bicycle frame. In addition, in the fastening method of a structure that can withstand vibration during riding, a wide clamp with plural rows of protruded parts is fixed to the outer pipe, and then plural rows of valleys inserting the protruded parts of the clamp are formed in the inner pipe to be inserted and pulled out, and thus, when locked by a clamp with a broad width, the two pipes are tightly fixed and fastened.

In addition, in order to manufacture a light bicycle which deviates from the reinforcement structure at several places which plays a major role in the weight increase of a tricycle, the whole frame on the two wheel side is divided into two sides and a pipe (for example, a fork) is provided up to the place where the wheels are fixed. As a reinforcing structure for fixing the shafts of the two wheels from the inside, it is preferable to attach and detach it by using a light material that may be different from the bicycle frame.

On the other hand, it is pointed out as one of the inconveniences in the utilization of the tricycle because the difference in the rotation distance between the two wheels makes it impossible to rotate smoothly when riding a bicycle. In order to solve this problem, according to the present invention, even if one of the two wheels is fixed to the shaft and rotated in exactly the same way as in a conventional method, there is proposed a method in which one wheel is not fixed to the wheel shaft, inclined in both directions of the wheel shaft and rotated separately, thereby easily absorbing the difference in rotation distance.

### ADVANTAGEOUS EFFECTS

According to the present invention, it is possible to separate the front wheel part and the rear wheel part of an adult tricycle that is bulky and heavy and difficult to handle, and the separated connecting pipe can be fixed at one place of the handle bar and the head tube, so that the separated front wheel part and rear wheel part are secured at two places and thus, the three wheels are fixed at the closest distance, which makes it convenient to transport and store. In order to fix the wheel shaft with three wheels, the structure composed of two strands by a material like a frame is avoided, and a structure of strength that one strand of the pipe can fix by one wheel is provided. By allowing the reinforcement structure of the material to be removed and attached which assists the shaft fixing as necessary, the tricycle is lightened, thereby allowing it to be used as a bicycle with high mobility, deviating from the existing tricycle which is mainly used as a rickshaw or a cart. Especially, in an electric bicycle having a limitation in weight reduction by mounting a heavy battery, when a tricycle with less influence of the center of gravity is utilized for the electric bicycle, its utilization is greatly expected.

On the other hand, if any one of the two wheels is fixed to the wheel shaft and not rotated and thus the wheels are rotated in a state of being tilted in both directions of the wheel shaft (see, Korean Patent No. 10-0858692), the rotation is further facilitated, thereby preventing the rollover due to unstable rotation. Therefore, the safety of the separation type tricycle can be greatly improved.

### Brief Description of Drawings

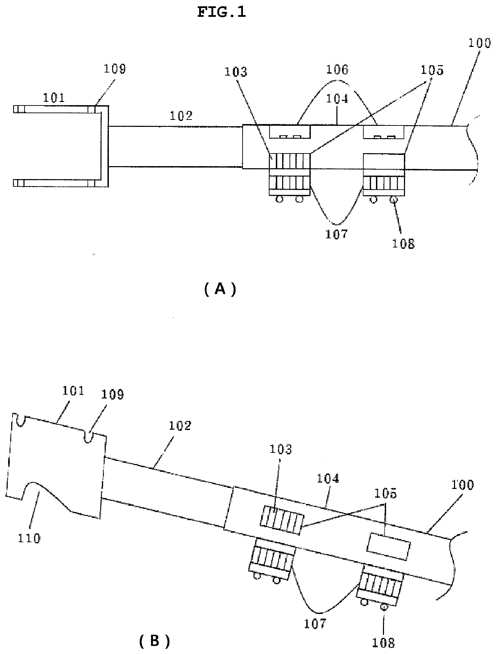

FIG. 1 illustrates a plane view (A) and a front view (B) of a connecting pipe, capable of separating and fastening, for connecting a front wheel part and a rear wheel part. This figure shows that the separation and fastening are made in the fastening device welded to the head tube of the front wheel at the end of the connecting pipe. FIG.1 also shows the shape of the connecting pipe when it is necessary to adjust the length of the connecting pipe. In this case, the connecting pipe is configured by a double pipe so that two pipes can be overlapped and inserted, and a part of the inner pipe has plural rows of valleys so that the length-adjusted two pipes can be fixed to each other.

Further, in the outer pipe, a wide clamp having several rows of protruded parts fitted into the valleys of the inner tube is fixed, and when the clamp has been locked, the front and rear wheels can be fastened between the fixed two pipes, without a slight movement, even by the forces exerted separately from each other.

When it is not necessary to adjust the length of the connecting pipe, the connecting pipe has a structure enabling only separation and fastening because the part enabling separation and fastening, that is, a right-side-open rectangular shaped connecting plate made at the end of one pipe rather than a double pipe, is provided.

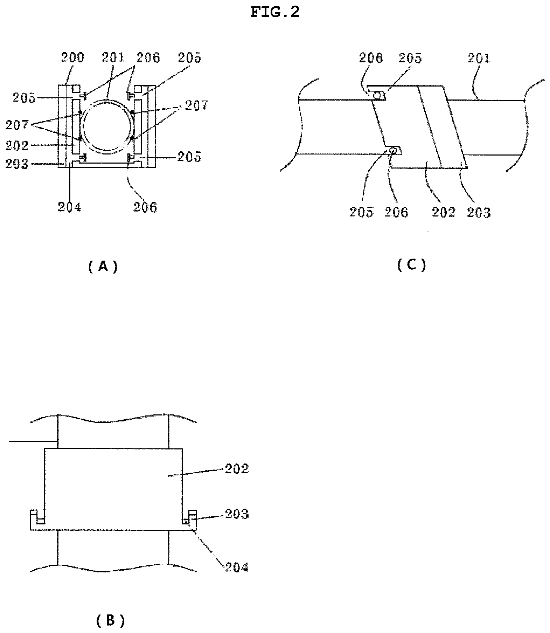

FIG. 2 illustrates a plane view (A), a front view (B) and a side view (C) of the fastening device welded to the head tube of the front wheel part. This figure shows that, in case where a right-side-open rectangular shaped fastening plate at the end of the connecting pipe is lifted up and fastened to the fastening device of the front wheel part, even if a device for locking the fastening plate and a fastening plate welded to the head tube has been loosed, a jaw is made on three sides of the fastening device so that the front and rear wheels are not separated by themselves. FIG. 2 also shows that a fastening plate of the fastening device welded to the head tube, and a right-side-open rectangular shaped fastening plate at the end of the connecting pipe are configured to be locked at two or more places.

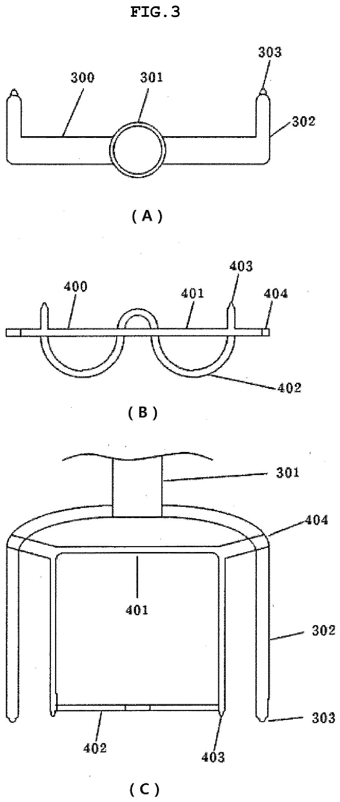

FIG. 3 is directed to a tricycle having two wheels on the front side and one wheel on the rear side, which illustrates a plane view (A) of a main frame fixing the front wheel, a plane view (B) of an auxiliary frame that aids in fixing the front wheel, and a front view (C) showing when an auxiliary frame is fixed to a main frame fixing the front wheel.

### DETAILED DESCRIPTION OF THE EMBODIMENTS

According to a preferred embodiment of the present invention, a right-side-open rectangular shaped plate 101 fixed to the fastening device 200 welded to a head tube is welded to the end of a separable and length-adjustable connecting pipe 100 for connecting the front wheel part and the rear wheel part. Therefore, if this plate 101 is placed on the valley 204 of the fastening device 200 and two or more fastening rings 206 fixed to a plate 202 of the fastening device 200 are locked at two or more places by a groove 109 in which the fastening ring goes in and out, the connecting plate 100 is tightly fastened to the front wheel part. Even if the fastening ring 206 is unlinked and the fastening part is loosed, a right-side-open rectangular shaped fastening plate 101 is inserted into the valley made by the jaw 203 of the fastening device 200, so that the front and rear wheel parts can be prevented from being separated by themselves.

Then, the lower side of the right-side-open rectangular shaped fastening plate 101 is grooved in an ear shape 110 so that the connecting pipe 100 can be put on a handle bar after separation. Even if a grooved part 110 is put on the handle bar after separating the connecting plate 100, three wheels are set at one place and so not fixed. Therefore, the three wheels of the separated tricycle are fixed at a close distance by allowing the wheels to easily connect and separate with each other using a connector or the like at one place of the head tube on the front wheel side and near the bottom bracket shell on the rear wheel side.

In addition, when it is necessary to adjust the length of the connecting pipe 100, it is configured so as to reduce or increase the length of the connecting pipe 100. This pipe is a double pipe composed of an inner pipe 102 and an outer pipe 104 so as to adjust the length of the connecting pipe 100. The inner pipe 102 has a part 103 with plural rows of valleys so that a wide clamp 107 with several rows of protruded parts can be locked. Therefore, after fastening, any part of the connecting pipe 100 is fastened without a slight movement, even by the forces exerted separately at the front and rear wheels. The outer tube 104 is provided with an open part 105 where the part 103 with a valley of the inner tube 102 appears, and one side of the wide clamp 107 is fixed by welding or the like. So, the protruded parts formed on one side of the clamp 107 having several protruded parts which are opened and closed, are inserted in a valley of the inner pipe 102, so that the inner pipe 102 and the outer pipe 104 are configured to be integrated.

### REFERENCE NUMERALS

100: a connecting pipe for connecting a front wheel part and a rear wheel part
101: a right-side-open rectangular shaped fastening plate fixed to a fastening device of the head tube
102: an inner pipe of the connecting pipe
103: a part having plural valleys in the inner pipe (a place locked by the clamp)
104: an outer pipe of the connecting pipe
105: a grooved part in which a part 103 with a valley of the inner pipe clearly appears at the outer pipe
106: one side of the clamp fixed to the outer pipe.
107: one side of a wide clamp with a protruded part that is opened and closed
108: a fastening ring of the clamp
109: a groove in which fastening ring 206 fixed to the fastening device 200 goes in and out
110: a part grooved in an ear-shape so as to be put on a handle bar
200: a fastening device attached to the head tube
201: a head tube
202: a fastening plate attached to the head tube
203: a jaw provided so that a right-side-open rectangular shaped fastening plate is not detached
204: a valley grooved so that a right-side-open rectangular shaped fastening plate is lifted up.
205: a part in which the fastening ring is inserted
206: a fastening ring
207: a part in which a fastening plate 202 is welded to a head tube 201
300: a part for adjusting the front wheel direction and for fixing the front wheel
301: a head stem
302: a fork
303: a wheel shaft fixing part
400: an auxiliary frame for fixing the front wheel
401: a upper cross bar of the auxiliary frame
402: a lower cross bar of the auxiliary frame
403: a wheel shaft fixing part
404: a part fixed to the front wheel direction adjustment and front wheel fixing part 300

## Claims

1. A method for fastening a separation type tricycle in which a right-side-open rectangular shaped plate 101 fixed to the end of a connecting pipe 100 for connecting a front wheel part and a rear wheel part is put on a valley 204 of the fastening device 200 attached to the head tube, and then fixed to a plate 202 of the device 200, thereby fastening the front wheel part and the rear wheel part so as not to be separated by themselves, without a slight movement at the fastening part.

2. The method for fastening a separation type tricycle of claim 1 wherein the end of the connecting pipe 100 grooved and separated in a shape 110, in which a handle bar can be put, is put on the handle bar at two surfaces opposite to the right-side-open rectangular shaped plate 101, and the wheels are connected and separated with each other at one place of the head tube on the front wheel side and near the bottom bracket shell, thereby allowing the three wheels to set at a close distance.

3. The method for fastening a separation type tricycle of claim 1 wherein, when the length of the separated connecting pipe 100 is long and so its handling is inconvenient, a part 103 with plural rows of valleys is provided in the inner pipe 102 so as to adjust the length, and an open part 105 where a part 103 with a valley of an inner pipe 102 appears at an outer pipe 104 is provided, wherein one or two clamps are fixed to the outer pipe 104 so as to be locked by a wide clamp 107 with plural rows of protruded parts, thereby adjusting the length freely.

4. A separation type tricycle wherein, when two wheels are present in a front wheel part, one fork 302, divided into two sides, fixed to a head stem 301 has a front wheel direction adjusting part 300 having a strong frame so as to support the wheel fisted to a wheel shaft fixing part 303 at the end thereof, and an auxiliary frame 400, enabling attachment/detachment or fixed, which is thin and light and aids in fixing of the front wheel, is provided, thereby reducing the weight.

5. A separation type tricycle wherein, when two wheels are placed on any one of the front wheel side and the rear wheel side, one of the two wheels is fixed to a wheel shaft and so not rotated, and thus the wheels are allowed to be rotated in a state of being tilted in both directions of the wheel shaft, thereby facilitating the rotation.
